# EUROPÄISCHE PATENTANMELDUNG

(11) **EP 1 033 640 A1**
(43) Veröffentlichungstag der Anmeldung: **06.09.2000**
(21) Anmeldenummer: 00200504.9
(22) Anmeldetag: 16.02.2000
(51) Int. Cl.: G05D 23/275

(54) **Steuergerät für einen thermostatventilaufsatz**

(30) Priorität: 02.03.1999 DE 19909101
(71) Anmelder: Danfoss A/S, 6430 Nordborg (DK)
(72) Erfinder: Frederiksen, Bjarne, 8600 Silkeborg (DK); Schubert, Flemming, 7100 Vejle (DK); Nielsen, Niels Steen, 8600 Silkeborg (DK); Rasmussen, Bent, 8600 Silkeborg (DK); Michelsen, Kenneth, 8000 Aarhus (DK)

(57) **Zusammenfassung**

Es wird ein Steuergerät (25) für einen Thermostatventilaufsatz (1) angegeben mit einem Gehäuse (29), das eine erste Fläche aufweist, die als Anlagefläche (15) ausgebildet ist.

Hierbei möchte man die Gefahr von Beschädigungen verringern können.

Dazu ist in der Anlagefläche (15) eine Öffnung (32) ausgebildet, hinter der im Innern des Gehäuses (29) ein Ausgangselement (28) einer Antriebseinrichtung (26) angeordnet ist.

## Beschreibung

Die Erfindung betrifft ein Steuergerät für einen Thermostatventilaufsatz mit einem Gehäuse, das eine erste Fläche aufweist, die als Anlagefläche ausgebildet ist.

Ein derartiges Steuergerät ist aus DE 35 45 232 A1 bekannt. Dieses Steuergerät wird an die Stirnseite eines Thermostatventilaufsatzes angesetzt und axial mit dem Aufsatz verspannt. Aus der Anlagefläche ragt ein Stößel heraus, der auf das Thermostatelement des Aufsatzes drückt und dort Druckverhältnisse simuliert, die ansonsten nur durch eine Temperaturänderung hervorgerufen werden könnten.

Thermostatventile mit ihren Aufsätzen sind seit einigen Jahrzehnten bekannt und zur Steuerung von Heizkörpern und Heizflächen, wie Fußbodenheizungen, weitgehend üblich und eingeführt. Mit Hilfe eines Drehgriffs (oder auf andere Weise) wird ein Sollwert vorgegeben. Der Thermostatventilaufsatz steuert dann das Heizungsventil so, daß der Istwert der Raumtemperatur sich dem Sollwert möglichst gut annähert. Allerdings ist dieses Verhalten weitgehend darauf beschränkt, daß ein konstanter Sollwert nachgefahren wird. Wenn Änderungen der Raumtemperatur gewünscht sind, beispielsweise bei einer Nachtabsenkung, bei der die Solltemperatur um 1 bis etwa 5°C abgesenkt werden soll, dann ist ein manueller Eingriff notwendig. Beispielsweise muß der Drehgriff um einen vorbestimmten Winkel verstellt werden.

Mit einem Steuergerät läßt sich nun dieser Eingriff beseitigen. Das Steuergerät kann, je nach Ausbildung auf unterschiedliche Arten, die Änderung des Sollwertes des Thermostatventilaufsatzes herbeiführen, beispielsweise, wie im bekannten Fall, durch Änderung der Druckverhältnisse am Thermostatelement, oder durch Änderung eines Eingriffs in den Wirkzusammenhang zwischen dem Thermostatelement und einem Betätigungselement, das letztendlich das Heizungsventil betätigt. Ein Beispiel für den letztgenannten Eingriff ist aus DE 31 53 654 C2 bekannt, allerdings ohne ein entsprechendes Steuergerät.

Das Steuergerät muß nicht nur bis zu seinem Montageort transportiert werden, man möchte vielfach auch vorsehen können, daß das Steuergerät vom Thermostatventilaufsatz abgenommen werden kann. Die Notwendigkeit hierfür kann vielfältig sein. Beispielsweise möchte man in der Lage sein, ein Steuergerät für Sommerbetrieb und ein Steuergerät für Winterbetrieb gegeneinander austauschen zu können. Es kann auch vorgesehen sein, daß man das Steuergerät abnehmen können möchte, um es programmieren zu können. In allen Fällen besteht die Gefahr, daß die Elemente, die vom Steuergerät auf den Thermostatventilaufsatz wirken, beschädigt werden. Da man derartige Elemente aus Gründen der Herstellungskosten und auch aus Gründen des Energieverbrauchs möglichst so dimensionieren möchte, daß sie ihre Aufgabe gerade erfüllen können, ist bei derartigen Steuergeräten die Gefahr von Beschädigungen relativ groß. Eine derartige Beschädigung führt, wenn sie das Steuergerät nicht ohnehin unbrauchbar macht, aber zu einer erhöhten Schwergängigkeit und damit auch zu einem erhöhten Energieverbrauch, der möglichst vermieden werden sollte.

Der Erfindung liegt die Aufgabe zugrunde, die Gefahr von Beschädigungen zu verringern.

Diese Aufgabe wird bei einem Steuergerät der eingangs genannten Art dadurch gelöst, daß in der Anlagefläche eine Öffnung ausgebildet ist, hinter der im Innern des Gehäuses ein Ausgangselement einer Antriebseinrichtung angeordnet ist.

Damit kann man die gesamte Antriebseinrichtung einschließlich des Elements, das letztendlich mit dem Thermostatventilaufsatz zusammenwirkt, um dort irgendwelche Verstellungen zu bewirken, im Innern des Gehäuses anordnen. Damit ist die Antriebseinrichtung relativ zuverlässig vor äußeren mechanischen Einflüssen geschützt. Die Gefahr also, daß durch eine versehentlich falsche Handhabung Teile der Antriebseinrichtung beschädigt werden, wird dadurch relativ kleingehalten. Gleichwohl wird durch den erfindungsgemäßen Aufbau eine Wirkverbindung zwischen der Antriebseinrichtung des Steuergeräts und den entsprechenden Übertragungselementen des Thermostatventilaufsatzes ermöglicht. Diese können nämlich durch die Öffnung in das Innere des Gehäuses eintreten. Da das Ausgangselement der Antriebseinrichtung hinter der Öffnung angeordnet ist, reicht es aus, das entsprechende Übertragungselement des Thermostatventilaufsatzes, das durchaus in Gehäuse des Thermostatventilaufsatzes angeordnet sein kann, in die Öffnung einzustecken. Mit dem Abschluß dieser Bewegung, die üblicherweise dadurch erfolgt, daß das Steuergerät auf den Thermostatventilaufsatz zu bewegt wird, ist die Herstellung der Wirkverbindung zwischen der Antriebseinrichtung und dem Verstellelement im Thermostatventilaufsatz abgeschlossen. Zwar ist es bei dieser Ausgestaltung notwendig, daß ein entsprechendes Übertragungselement am Thermostatventilaufsatz vorhanden ist. Dies ist jedoch weniger kritisch. Der Thermostatventilaufsatz bleibt üblicherweise stationär am Heizkörperventil oder dem Ventil einer anderen Heizfläche. Diese Ventile sind normalerweise im Bereich einer Wand oder im Bereich des Heizkörpers angeordnet, also an Positionen, wo man bei der normalen Nutzung eines Raumes nicht unbedingt ständig hingreift. Die Gefahr, daß ein Übertragungselement am Thermostatventilaufsatz beschädigt wird, ist also etwa genau so groß, wie die Gefahr, daß der Thermostatventilaufsatz selber beschädigt wird. Man weiß aus der Vergangenheit aber, daß derartige Beschädigungen zwar vorkommen, aber ausgesprochen selten sind.

Vorzugsweise ist die Öffnung schlitzartig ausgebildet und das Ausgangselement ist als Ritzel ausgebildet, das hinter der Öffnung angeordnet ist. Mit dieser Ausbildung gestattet man, daß das Übertragungselement das mit dem Steuergerät in Verbindung kommt, als Zahnrad ausgebildet ist. Die Übertragung zwischen der Antriebseinrichtung im Steuergerät und dem Verstellelement im Thermostatventilaufsatz kann also über ein Zahnradgetriebe erfolgen, das relativ verlustarm arbeiten kann. Gleichzeitig wird die lichte Weite der Öffnung kleingehalten, so daß auch Beeinträchtigungen durch die Öffnung hindurch relativ unwahrscheinlich sind.

Vorzugsweise ist eine Befestigungsanordnung vorgesehen, die im wesentlichen senkrecht zur Anlagefläche lösbar ist. Damit erfolgt die Verbindung zwischen dem Thermostatventilaufsatz und dem Steuergerät dadurch, daß das Steuergerät senkrecht zur Anlagefläche auf den Thermostatventilaufsatz zu bzw. von ihm bewegt wird. Auf diese Weise läßt sich relativ einfach der Übertragungspfad zwischen der Antriebseinrichtung des Steuergeräts und dem Verstellelement im Thermostatventilaufsatz zusammenstecken. Die Befestigungsanordnung kann in diesem Fall relativ einfach als eine Art Schnapp- oder Clipsverbindung ausgeführt sein. Natürlich bildet die Befestigungsanordnung des Steuergeräts nur einen Teil der Gesamtbefestigung, bei dem Elemente des Thermostatventilaufsatzes mit der Befestigungsanordnung des Steuergeräts zusammenwirken. Im Extremfall kann die Befestigungsanordnung des Steuergeräts einfach nur durch eine Fläche gebildet sein, hinter die Haken am Thermostatventilaufsatz eingreifen.

Vorzugsweise ist das Ausgangselement innerhalb einer Fläche angeordnet, die durch die Befestigungsanordnung aufgespannt ist. Damit werden Belastungen der Verbindung zwischen den Steuergerät und dem Thermostatventilaufsatz kleingehalten. Wenn das Steuergerät die Antriebseinrichtung in Betrieb setzt, dann wirken Kräfte an einer Eingriffstelle zwischen dem Ausgangselement der Antriebsanordnung und dem entsprechenden Eingangselement des Thermostatventilaufsatzes, beispielsweise einem Zahnrad. Diese Kräfte wirken nun über jeweilige Hebel zwischen dieser Eingriffsstelle und den einzelnen Punkten der Befestigungsanordnung. Wenn man nun dafür sorgt, daß der entsprechende Eingriffspunkt innerhalb einer Fläche angeordnet ist, die durch die Befestigungsanordnung aufgespannt ist, dann neutralisieren sich die einzelnen Drehmomente weitgehend, d.h. bei der Betätigung der Antriebseinrichtung wird ein Kippen des Steuergerätes gegenüber dem Thermostatventilaufsatz weitgehend verhindert.

Dies ist bevorzugterweise dann der Fall, wenn die Befestigungsanordnung zwei Haupttragelemente aufweist, die in der gleichen Ebene angeordnet sind wie das Ausgangselement. In diesem Fall kommt man mit zwei "Beinen" aus, über die die wesentlichen Kräfte abgefangen werden, die bei der Befestigung des Steuergeräts am Thermostatventilaufsatz entstehen, insbesondere die Gewichtskräfte. Dies schließt nicht aus, daß noch kleinere "Haltebeine" vorgesehen sein können, die ein Abspreizen des Steuergerätes vom Thermostatventilaufsatz verhindern sollen. Wenn man nun den Eingriffspunkt zwischen dem Ausgangselement und dem entsprechenden Eingangselement genau zwischen die beiden Haupttragelemente legt, dann wird der Hebel senkrecht zur Kraftrichtung des Ausgangselements praktisch zu Null vermindert. Es entsteht also kein Drehmoment, das zu einem Kippen des Steuergeräts gegenüber dem Thermostatventilaufsatz führen könnte. Die mechanischen Belastungen auf die Verbindung werden also kleingehalten.

Vorzugsweise weist das Steuergerät einen Entriegelungsaktivator auf. Wie oben bereits erwähnt worden ist, kann vorgesehen sein, daß das Steuergerät vom Thermostatventilaufsatz abgezogen werden soll. In diesem Fall steht ein Teil der mechanischen Übertragungsstrecke, beispielsweise ein Zahnrad, nach außen aus dem Gehäuse des Thermostatventilaufsatzes vor. Wenn also das Steuergerät abgenommen ist, dann besteht die Gefahr, daß durch eine ungeschickte Handhabung (oder auch durch Vorsatz) dieses Zahnrad verdreht wird. Das Steuergerät "weiß" dann nicht mehr, welche Einstellung der Thermostatventilaufsatz hat. Mit dem Entriegelungsaktivator wird nun auf einfache Art und Weise eine Möglichkeit geschaffen, dieses Problem zu umgehen. Hierzu ist es lediglich erforderlich, daß der Thermostatventilaufsatz eine Sperre aufweist, die ein Verstellen der Verstelleinrichtung von außen dann verhindert, wenn das Steuergerät abgenommen worden ist. Lediglich bei aufgesetztem Steuergerät ist ein Element am Steuergerät vorgesehen, das diesen Verriegelungsmechanismus außer Kraft setzt oder, in einer anderen Ausgestaltung, eine Kupplung zwischen der Übertragungsstrecke und dem Verstellelement einrückt. Somit ist eine Verstellung der Verstelleinrichtung im Thermostatventilaufsatz nur dann möglich, wenn das Steuergerät aufgesetzt ist.

In einer bevorzugten Ausgestaltung ist der Entriegelungsaktivator als Stößel ausgebildet. Dieser Stößel kann in den Thermostatventilaufsatz eingesteckt werden und dort beispielsweise eine Rast- oder Bremskupplung ausrücken, die auf ein Zahnrad, vorzugsweise das Eingangszahnrad, der Übertragungsstrecke wirkt. Der Stößel kann auch genutzt werden, um eine Kupplung einzurücken, die dann eine geschlossene Übertragungsstrecke vom Eingangszahnrad zu dem entsprechenden Verstellelement ermöglicht.

Alternativ zu dem Stößel oder zusätzlich dazu kann der Entriegelungsaktivator als Magnet ausgebildet sein. In diesem Fall erfolgt die Kraftübertragung elektromagnetisch, aber ansonsten mit der gleichen Wirkung.

Vorzugsweise ist eine Eingabeanordnung in der Anlagefläche ausgebildet. Wenn die Eingabeanordnung in der Anlagefläche ausgebildet ist, dann wird sie vom Thermostatventilaufsatz verdeckt, wenn das Steuergerät am Thermostatventilaufsatz montiert ist. Dies kann den optischen Eindruck der Gesamteinheit Thermostatventilaufsatz und Steuergerät verbessern. Das Steuergerät kann beispielsweise im übrigen außen ein glattes Gehäuse aufweisen, was auch die Reinigungsmöglichkeiten verbessert. Im übrigen ist die Eingabeanordnung im montierten Zustand auch vor versehentlichen Fehlbedingungen geschützt. Dies erhöht die Betriebssicherheit des Steuergerätes. Darüber hinaus erhöht diese Ausgestaltung den Bedienungskomfort. Zwar muß der Benutzer das Steuergerät vom Thermostatventilaufsatz abnehmen, um irgendwelche Änderungen in der Steuerung oder dem Steuerungsprogramm vornehmen zu können. Wenn der Benutzer das Steuergerät aber abgenommen hat, ist er nicht mehr gezwungen, die Einstellungen im Bereich des Thermostatventilaufsatzes vorzunehmen. Der Thermostatventilaufsatz ist in der Regel allenfalls hüfthoch, vielfach jedoch noch niedriger angeordnet, so daß eine Programmierung nur in gebückter Haltung vorgenommen werden könnte. Wenn der Benutzer jedoch erst einmal gezwungen ist, das Steuergerät abzunehmen, um Änderungen der Programmierung durchführen zu können, dann kann er sich mit dem Steuergerät in eine bequeme Position begeben, beispielsweise an einen Tisch setzen und die Programmierung durchführen. Danach wird das Steuergerät einfach auf seinen Platz gesetzt und der Programmierungsvorgang ist abgeschlossen.

Hierbei ist besonders bevorzugt, daß die Eingabeanordnung eine Anzeige aufweist, deren Energieversorgung mit einem Schalter verbunden ist, der die Anzeige im montierten Zustand ausschaltet. Im montierten Zustand kann der Benutzer die Anzeige ohnehin nicht erkennen. Dementsprechend kann man Energie in nicht unerheblichem Maße einsparen, wenn man die Anzeige in diesem Zustand ausschaltet. Dies ist insbesondere dann von Vorteil, wenn das Steuergerät als Energiequelle elektrische Batterien enthält.

Die Erfindung wird im folgenden anhand eines bevorzugten Ausführungsbeispiels in Verbindung mit der Zeichnung näher beschrieben. Hierin zeigen:
- Fig. 1: eine schematische Schnittansicht eines Steuergeräts neben einem Thermostataufsatz,
- Fig. 2: eine Draufsicht auf eine Anlagefläche des Steuergeräts und
- Fig. 3: einen Schnitt III-III nach Fig. 1, wobei Steuergerät und Thermostataufsatz zusammengesetzt sind.

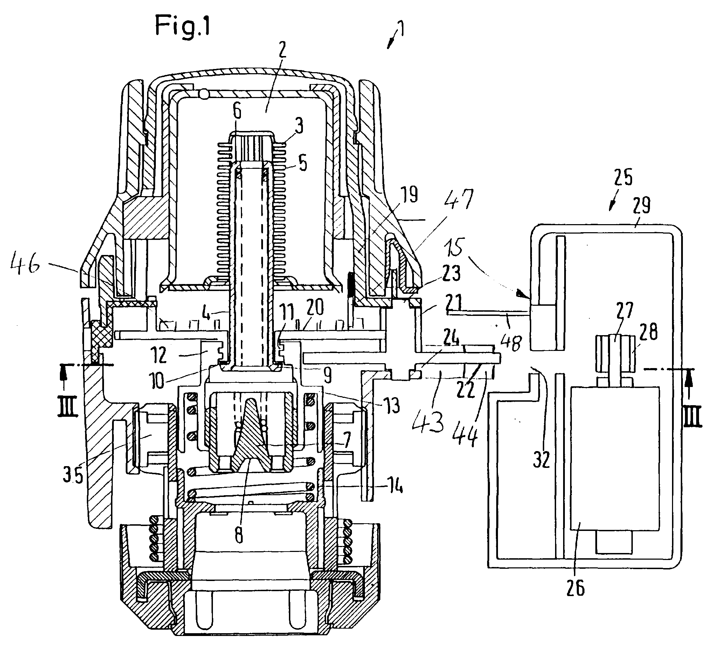

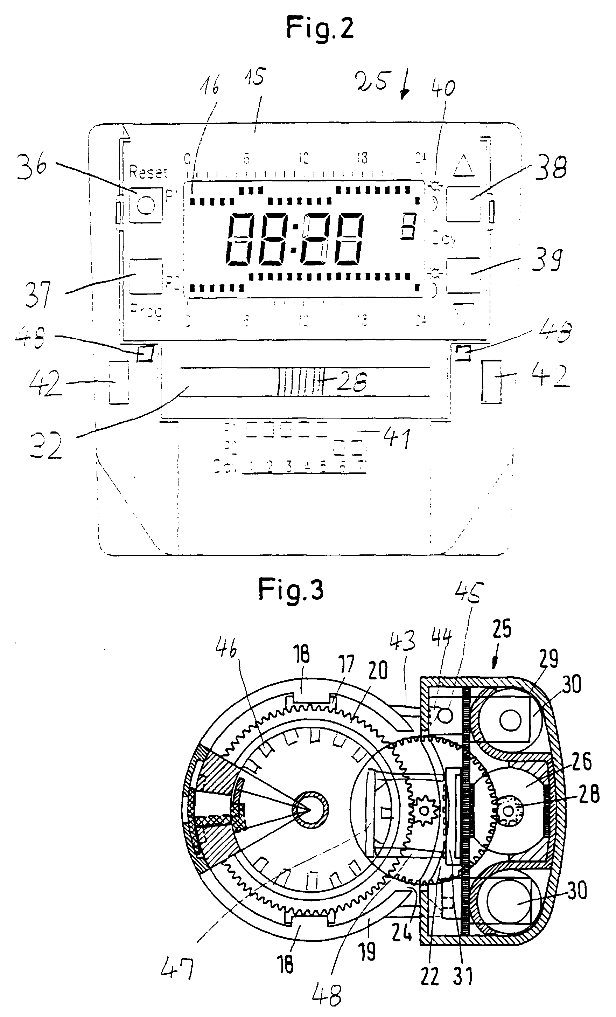

Fig. 1 zeigt ein Steuergerät 25 neben einem Thermostataufsatz 1 in auseinandergenommenem Zustand. Fig. 3 zeigt eine Schnittansicht III-III, wenn diese beiden Teile zusammengesetzt sind.

Um die Funktion und die Verwendung des Steuergeräts 25 im Zusammenwirken mit dem Thermostataufsatz 1 zu erläutern, wird im folgenden zunächst der Thermostataufsatz 1 schematisch erläutert.

Der Thermostataufsatz 1 weist ein Thermostatelement 2 mit einem Balgen 3 auf, in dein eine Spindel 4 angeordnet ist. Das Thermostatelement 2 ist gefüllt mit einem Material, das sich bei Temperaturerhöhung ausdehnt und bei Temperaturabsenkung sein Volumen vermindert. Dementsprechend wird bei einer Temperaturerhöhung der Balgen 3 zusammengedrückt und die Spindel 4 nach unten (bezogen auf die Ausrichtung der Fig. 1) verlagert.

In der Spindel 4 ist eine Überdruckfeder 5 angeordnet, die sich an der oberen Stirnseite 6 der Spindel 4 abstützt. Im übrigen kann die Stirnseite 6 offen sein. Die Überdruckfeder liegt mit ihrem anderen Ende an einem Konus 7 an, dessen unteres Ende eine Anlagefläche 8 für einen Stößel eines nicht näher dargestellten Heizkörperventils bildet. Wenn der Stößel eingedrückt körperventils bildet. Wenn der Stößel eingedrückt wird, wird das Heizkörperventil stärker gedrosselt.

Die Spindel 4 weist an ihrem unteren Rand einen außen umlaufenden Flansch 9 auf, mit dem sie unter Zwischenlage einer Scheibe aus Teflon (Polytetrafluorethylen) an einem ersten Gewindestück 11 anliegt. Dieses Gewindestück 11 ist eingeschraubt in ein zweiten Gewindestück 12, das wiederum einteilig ausgebildet ist mit einem Träger 13, in den der Konus 7 eingeschraubt ist. Der Träger 13 wird im übrigen von einer Druckfeder 14 nach oben gedrückt, d.h. von dem nicht näher dargestellten Ventilstößel weg. Der Träger 13 ist über eine Drehmomentstütze 35 am Gehäuse 19 abgestützt, d.h. er ist relativ zum Gehäuse 19 zwar axial verschiebbar, kann aber nicht gedreht werden.

Wie aus Fig. 3 zu erkennen ist, ist die Spindel 4 mit einer Drehmomentstütze 17 versehen, die in Vorsprünge 18 am Gehäuse 19 des Thermostataufsatzes eingreift, so daß die Spindel 4 undrehbar gehalten ist.

Die Spindel 4 wird durch die Überdruckfeder 5 vom Konus 7 weggedrückt und mit ihrem Flansch 9 in Anlage am ersten Gewindestück 11 gehalten. Wenn nun das erste Gewindestück 11 und das zweite Gewindestück 12 gegeneinander verdreht werden, ändert sich die Länge des für die Überdruckfeder 5 zur Verfügung stehenden Raums, d.h. der Abstand zwischen dem Konus 7 und der Stirnseite 6 der Spindel 4, an denen sich die Überdruckfeder abstützt. Dementsprechend kommt das Thermostatelement 2 früher oder später zur Wirkung. Wenn der Abstand zwischen dem Konus 7 und der Stirnseite 6 größer ist, dann wird bei ansonsten gleicher Umgebungstemperatur das Heizkörperventil durch das Thermostatelement 2 früher gedrosselt als bei einem kleineren Abstand.

Um den Abstand zu verändern, ist das erste Gewindestück 11 einstückig mit einem Zahnrad 20 ausgebildet, das das letzte Zahnrad eines Zahnradgetriebes bildet. Das Zahnrad 20 kämmt mit einem Ritzel 21, das wiederum einstückig ausgebildet ist mit einem Eingangszahnrad 22. Die Kombination aus Ritzel 21 und Eingangszahnrad 22 weist Lagerzapfen 23 auf, die aus Kunststoff gebildet sind und im Gehäuse 19, das ebenfalls aus Kunststoff gebildet ist, drehbar gelagert sind. Hierbei ragt das Eingangszahnrad 22 durch einen Schlitz 24 im Gehäuse 19 nach außen.

An das Gehäuse 19 ist das Steuergerät 25 angekoppelt, beispielsweise durch eine Schnappverbindung. Das Steuergerät 25 weist einen kleinen Elektromotor 26 auf, auf dessen Abtriebswelle 27 ein Ritzel 28 befestigt ist, das mit dem Eingangszahnrad 22 kämmt.

Das Steuergerät 25 weist ein Gehäuse 29 auf, in dem auch Batterien 30 angeordnet sind, die als Energiequelle für den Motor 26 dienen. Ferner ist in dem Gehäuse 29 eine Steuereinrichtung 31 untergebracht, die den Motor 26 steuert. Das Steuergerät kann beispielsweise eine Zeitschaltuhr aufweisen. Es kann auch einen Empfänger aufweisen, der Signale von einer Zentraleinheit (nicht näher dargestellt) empfängt und auf der Grundlage dieser Befehle den Motor 26 betätigt.

Wenn nun der Motor 26 betätigt wird, dann wird über das Zahnradgetriebe 22, 21, 20 das erste Gewindestück 11 relativ zum zweiten Gewindestück 12 verdreht. Damit verlängert oder verkürzt sich die wirksame "Spindellänge", d.h. der Abstand zwischen der Stirnseite 6 und dem Konus 7. Damit wird der Wirkzusammenhang zwischen dem Thermostatelement 2 und dem Konus 7 verändert, d.h. bei ansonsten unveränderten Umgebungstemperaturen schließt das Heizkörperventil, das durch den Thermostataufsatz 1 gesteuert ist, früher oder später.

Das Steuergerät 25 weist eine Anlagefläche 15 auf, mit der es im montierten Zustand am Gehäuse des Thermostatventilaufsatzes 1 anliegt. Diese Anlagefläche ist in Fig. 2 dargestellt. Es ist erkennbar, daß die Anlagefläche 15 eine Anzeige 16 und verschiedene Betätigungsorgane 36 bis 39 in Form von Tastschaltern aufweist. Ferner kann auf der Anlagefläche 15 eine Beschriftung 40 vorgesehen sein. Auch weitere Schalter 41 können auf der Anlagefläche 15 vorgesehen sein.

Ferner ist in der Anlagefläche 15 eine Öffnung 32 vorgesehen, die schlitzartig ausgebildet ist. Hinter der Öffnung 32 ist das Ritzel 28 auf der Abtriebswelle 27 des Motors 26 angeordnet. Wie insbesondere aus Fig. 3 zu erkennen ist, befindet sich damit das Ritzel 28 geschützt im Innern des Gehäuses 29, so daß die Gefahr einer Beschädigung gering ist.

Die Öffnung 32 ist so groß, daß das Eingangszahnrad 22 problemlos eintreten kann. Da die Höhe der Öffnung 32 jedoch beschränkt ist, bleibt die lichte Weite der Öffnung 32 klein. Das Vordringen von mechanischen Störungen wird dadurch erschwert.

Links und rechts neben der schlitzartigen Öffnung 32 sind Öffnungen 42 vorgesehen, die Teil einer Befestigungsanordnung bilden. Wie aus den Fig. 1 und 3 zu erkennen ist, ist der Thermostatventilaufsatz 1 mit vorspringenden Armen 43 versehen, die an ihrer Spitze Widerhaken 44 aufweisen, mit denen das Gehäuse 29 des Steuergeräts 25 auf den Thermostatventilaufsatz 1 aufgesteckt und aufgeclipst werden kann. Mit nicht näher dargestellten Mitteln ist es möglich, diese Clips- oder Rastverbindung wieder zu lösen.

Die Bewegung des Steuergeräts 25 bei der Montage oder Demontage erfolgt also senkrecht zu der Anlagefläche 15. Die Anlagefläche 15 und damit die Bedieneinrichtung mit der Anzeige 16 und den Schaltern 36 bis 39 und 41 ist im montierten Zustand vom Thermostatventilaufsatz 1 abgedeckt. Ferner ist ein Schalter 45 vorgesehen, der von dem Widerhaken 44 betätigt wird, wenn das Steuergerät 25 am Thermostatventilaufsatz 1 montiert ist. Dieser Schalter unterbricht die Energieversorgung der Anzeige 16, schaltet sie also im montierten Zustand aus.

Wie insbesondere aus Fig. 2 zu erkennen ist, ist die Befestigungsanordnung 42 links und rechts neben der Öffnung 32 angeordnet. Die Befestigung des Steuergeräts 25 am Gehäuse erfolgt also so, daß der Eingriffspunkt des Eingangszahnrades 22 innerhalb einer Fläche liegt, die durch die Befestigungsanordnung aufgespannt ist. Damit wird ein Hebel zwischen dem Eingriffspunkt, an dem eine Kraft eingeleitet wird, und dem Gehäuse 29 des Steuergerätes 25 praktisch auf Null reduziert, so daß kein Drehmoment entstehen kann, das das Steuergerät 25 gegenüber dem Thermostataufsatz 1 verdreht, wenn der Motor 26 in Betrieb gesetzt wird. Daneben können natürlich auch noch weitere Befestigungselemente vorgesehen sein. Die Öffnungen 42 bilden jedoch einen Bestandteil der Haupttragelemente zur Befestigung des Steuergeräts 25 am Thermostatventilaufsatz 1.

In Fig. 1 und in Fig. 3 ist schematisch dargestellt, daß auf dem Zahnrad 20 nach oben vorstehende Fortsätze 46 angeordnet sind. Diese Fortsätze 46 werden dann, wenn das Steuergerät 25 demontiert ist, von einer Sperre 47 blockiert. Am Steuergerät 25 sind zwei Stößel 48 vorgesehen, die am Ritzel 21 vorbei die Sperre 47 radial nach innen drücken, wenn das Steuergerät 25 montiert wird. Die Sperre 47 ist hierbei federnd am Gehäuse 19 des Thermostatventilaufsatzes 1 befestigt. Wenn das Steuergerät 25 abgenommen wird, dann verriegelt die Sperre 47 eine Verstellung des Verstellmechanismus. Die Stößel 48 bilden also sozusagen einen Entriegelungsaktivator.

## Patentansprüche

1. Steuergerät für einen Thermostatventilaufsatz mit einem Gehäuse, das eine erste Fläche aufweist, die als Anlagefläche ausgebildet ist, dadurch gekennzeichnet, daß in der Anlagefläche (15) eine Öffnung (32) ausgebildet ist, hinter der im Innern des Gehäuses (29) ein Ausgangselement (28) einer Antriebseinrichtung (26) angeordnet ist.

2. Steuergerät nach Anspruch 1, dadurch gekennzeichnet, daß die Öffnung (32) schlitzartig ausgebildet ist und das Ausgangselement als Ritzel (28) ausgebildet ist, das hinter der Öffnung (32) angeordnet ist.

3. Steuergerät nach Anspruch 1 oder 2, dadurch gekennzeichnet, daß eine Befestigungsanordnung (42) vorgesehen ist, die im wesentlichen senkrecht zur Anlagefläche (15) lösbar ist.

4. Steuergerät nach Anspruch 3, dadurch gekennzeichnet, daß das Ausgangselement (28) innerhalb einer Fläche angeordnet ist, die durch die Befestigungsanordnung (42) aufgespannt ist.

5. Steuergerät nach Anspruch 4, dadurch gekennzeichnet, daß die Befestigungsanordnung (42) zwei Haupttragelemente aufweist, die in der gleichen Ebene angeordnet sind wie das Ausgangselement (28).

6. Steuergerät nach einem der Ansprüche 1 bis 5, dadurch gekennzeichnet, daß es einen Entriegelungsaktivator (48) aufweist.

7. Steuergerät nach Anspruch 6, dadurch gekennzeichnet, daß der Entriegelungsaktivator (48) als Stößel ausgebildet ist.

8. Steuergerät nach Anspruch 6, dadurch gekennzeichnet, daß der Entriegelungsaktivator als Magnet ausgebildet ist.

9. Steuergerät nach einem der Ansprüche 1 bis 8, dadurch gekennzeichnet, daß eine Eingabeanordnung (16, 36-39) in der Anlagefläche (15) ausgebildet ist.

10. Steuergerät nach Anspruch 9, dadurch gekennzeichnet, daß die Eingabeanordnung (16, 36-39) eine Anzeige (16) aufweist, deren Energieversorgung mit einem Schalter (45) verbunden ist, der die Anzeige in montierten Zustand ausschaltet.
